# EUROPÄISCHE PATENTANMELDUNG

(11) **EP 1 136 210 A2**
(43) Veröffentlichungstag der Anmeldung: **26.09.2001**
(21) Anmeldenummer: 01105622.3
(22) Anmeldetag: 07.03.2001
(51) Int. Cl.: B27G 19/02

(54) **Vertikal-Sägemaschine mit einem kreisförmigen Sägeblatt**

(30) Priorität: 14.03.2000 DE 10012230
(71) Anmelder: Eisele Sägesysteme GmbH, 73257 Köngen (DE)
(72) Erfinder: Faig, Paul, 72669 Unterensingen (DE); Holder, Kurt, 73257 Köngen (DE)
(74) Vertreter: Zapfe, Hans, Dipl.-Ing.

(57) **Zusammenfassung**

Bei einer Vertikal-Sägemaschine mit einem Sägemaschinentisch (1), einem Getriebe mit einem Getriebegehäuse (5) und einer Sägewelle (6) mit kreisförmigem Sägeblatt (7), mit einer vertikalen Parallelführung (4) für das Verfahren von Getriebegehäuse (5) und und Sägeblatt (7) an einer vertikalen Führungssäule (3) sowie mit einer Schutzvorrichtung, die das Sägeblatt (7) zumindest auf einem Teil seines Umfangs mittels eines teilweise schachtförmigen Schutzgehäuses (8) umgreift, das eine Außenwand (9), eine Frontwand (10) und eine Innenwand (11) besitzt, weisen die Außenwand (9), die Frontwand (10) und die Innenwand (11) eine Höhe "H" auf, die mindestens dem Durchmesser des Sägeblatts (7) entspricht. Dadurch läßt sich einerseits das Sägeblatt (7) vollständig im Schutzgehäuse (8) unterbringen, und andererseits ist das Schutzgehäuse (8) an einer Parallelführung (19) angeordnet, mittels welcher das Schutzgehäuse (8) so weit anhebbar ist, daß das Sägeblatt (7) mühelos und zeitsparend von der Sägewelle (6) abnehmbar ist.

## Beschreibung

Die Erfindung betriff eine Vertikal-Sägemaschine nach dem Oberbegriff des Patentanspruchs 1. Die Sägemaschine ist insbesondere für das Sägen von Metallen vorgesehen.

Durch die EP 0 109 632 A1 ist eine Schutzvorrichtung für Sägeblätter von Vertikal-Kreissägen bekannt, bei der am Getriebegehäuse ein oberes, erstes Gehäuseteil befestigt ist, das den Radius des Sägeblattes von oben etwa U-förmig übergreift und bei dem die Enden der beiden Schenkel bis zu einer waagrechten Ebene herunterragen, die unterhalb der Achse der Sägewelle liegt. Auf der dem Getriebegehäuse abgekehrten Seite ist dieses obere Gehäuseteil mit einer Vorderwand versehen, die einen etwa kreisbogenförmigen Ausschnitt besitzt, durch den gerade eben die Befestigungselemente des Sägeblattes zugänglich sind. An diesem oberen Gehäuseteil ist mittels einer Teleskopführung ein unteres, zweites Gehäuseteil gelagert, das in einer waagrechten Schnittebene etwa C-förmig ausgebildet ist und mit seinem oberen Rand die unteren Enden der Schenkel des oberen Gehäuseteils übergreift. Beim Aufsetzen des unteren Gehäuseteils auf dem Werkstück bei der Abwärtsbewegung des Sägeblatts schiebt sich das untere Gehäuseteil über das obere Gehäuseteil.

Um diese Bewegung zu ermöglichen, befindet sich auf der Rückseite des unteren Gehäuseteils ein Spalt, so daß die beiden zwischen dem Sägeblatt und dem Getriebegehäuse liegenden Kanten dieses Spalts die Sägewelle zwischen sich aufnehmen können. Dabei sind diese Kanten aus Festigkeitsgründen an ihren unteren Enden durch einen Steg miteinander verbunden. Ein- und Ausbau des Sägeblatts werden dabei jedoch sowohl durch die Vorderwand des oberen Gehäuseteils als auch durch den unteren Gehäuseteil behindert, so daß zum Zwecke eines Wechsels des Sägeblatts eine mindestens teilweise Demontage der Schutzvorrichtung erforderlich ist, ein Vorgang, der sich als umständlich und zeitraubend erweist. Dennoch führen die nicht verschließbaren Öffnungen zu einem Austritt von Spänen, Kühl- und Schmiermittel an die Umgebung.

Durch das DE 78 37 368 U1 ist es bekannt, eine Sägemaschine mit einem Getriebe und einem Kreissägeblatt für Metalle an einer ersten vertikalen Führungssäule zu führen und das zugehörige Schutzgehäuse an einer zweiten vertikalen Führungssäule. Da diese gegenüber dem Sägeblatt in seiner Tiefststellung jedoch nur einen beschränkten Hub ermöglicht, besitzt das Schutzgehäuse eine oben angelenkte Verschlußklappe in einer Wandöffnung, deren Höhenabmessungen jedoch kleiner sind als der Durchmesser des Sägeblattes. Um dieses Sägeblatt, das mit engem Spiel auf einer Nabe sitzt, aus dem Schutzgehäuse entnehmen zu können, muß es nach dem Lösen seiner Verschraubung zurerst parallel zu sich selbst abgezogen, dann verkantet und schräg nach oben aus der Wandöffnung abgezogen werden, weil ein Abziehen nach unten durch den Maschinentisch und die Spannvorrichtung mit dem Werkstück verhindert wird. Die Handhabung gestaltet sich schwierig, da zwischen dem Rand der Öffnung und einem Teilumfang des scharfkantigen Sägeblatts nur zwei enge Spalte zum Hineingreifen vorhanden sind. Durch die oben liegenden Scharniere der Klappe hat man erreicht, daß die Klappe von allein wieder nach unten umklappt. Dadurch wurden die Scharnierbefestigung und die Klappe selbst aber bereits nach kurzer Zeit zerstört. Eine spätere Änderung in einen einsteckbaren Verschlußdeckel hat keine Vorteile gebracht, da der Verschlußdeckel herunterfiel, in dem Spänebehälter landete und/oder gleichfalls beschädigt wurde. Eine Vergrößerung des Hubes zur kompletten Freilegung des Sägeblatts ist nicht angesprochen und wäre auch nur bei entsprechender Verlängerung und Versteifung der zweiten Führungssäule möglich. Nur dann wäre das Sägeblatt in Achsrichtung abziehbar.

Durch die DE 196 35 527 A1 ist eine Handkreissäge für die Holzbearbeitung bekannt, bei der der Motor mit Getriebe und Sägeblatt an einer Lenkeranordnung befestigt sind, die auch als Parallelogrammlenker-anordnung ausgeführt sein kann und an einer Fußplatte für die Führung der Säge auf dem Holz angelenkt ist. Bei einem Ausführungsbeispiel ist ein Schutzgehäuse mit dem Motorgehäuse verbunden, bei einem weiteren Ausführungsbeispiel ist das Schutzgehäuse an der Fußplatte befestigt. In beiden Fällen kann jedoch das Schutzgehäuse nicht so weit vom Sägeblatt entfernt werden, daß dieses gelöst und in Achsrichtung abgezogen werden könnte. Mit dieser Problematik befaßt sich aber auch diese Schrift nicht.

Der Erfindung liegt daher die Aufgabe zugrunde, eine Schutzvorrichtung anzugeben, bei der die Kapselung bzw. der Einschluß des Sägeblatts während des Sägens verbessert ist und die dennoch einen müheloseren und zeitsparenden Wechsel des Sägeblatts erlaubt.

Die Lösung der gestellten Aufgabe erfolgt bei der eingangs angegebenen Schutzvorrichtung erfindungsgemäß durch die Merkmale im Kennzeichen des Patentanspruchs 1.

Mit der Erfindung wird die gestellte Aufgabe in vollem Umfange gelöst, insbesondere wird eine Schutzvorrichtung angegeben, bei der die Kapselung bzw. der Einschluß des Sägeblatts während des Sägens verbessert ist und die dennoch einen müheloseren und zeitsparenden Wechsel des Sägeblatts erlaubt.

Es ist im Zuge weiterer Ausgestaltungen der Erfindung besonders vorteilhaft, wenn - entweder einzeln oder in Kombination - :
* das Schutzgehäuse so weit anhebbar ist, daß die Unterkante der Außenwand, in der Projektion auf die Sägeblattebene gesehen, oberhalb des höchsten Punktes des Sägeblatts liegt,
* oberhalb des Sägeblatts in einem dachformigen Innenteil mindestens ein Einbauteil aus der Gruppe Späneräumer, Sprüheinrichtung und Kühlmitteldüse angeordnet ist und wenn durch den Hub des Schutzgehäuses auch das Innenteil mit seinen Einbauten zugänglich ist,
* die Parallelführung aus parallelen Lenkern besteht, deren eine Enden am Schutzgehäuse und deren jeweils andere Enden an der Führungssäule angelenkt sind,
* Parallelführung des Schutzgehäuses mit einer Einrichtung zum Gewichtsausgleich zusammenwirkt,
* die Einrichtung zum Gewichtsausgleich als Gasfeder ausgebildet ist, die auf einen der Lenker einwirkt,
* die Parallelführung mit einem Endschalter für die Erfassung der Stellung des Schutzgehäuses zusammenwirkt,
* das Schutzgehäuse ein fest eingebautes Sichtfenster aufweist,
* an dem Getriebegehäuse mittels einer vertikalen Längsführung ein Schubstück gelagert ist, an dem eine Blende angelenkt ist, die sich zwischen dem Getriebegehäuse und dem Sägeblatt befindet, deren unterer Rand in der Tiefststellung den untersten Kreisbogen des Sägeblatts überdeckt und die beim Sägevorgang seitlich ausschwenkbar ist,
* an dem Schubstück ein Ausleger mit einem Gelenkzapfen angeordnet ist, der sich oberhalb der Sägewelle befindet und die Blende trägt,
* an der Innenwand des Schutzgehäuses zwischen dem Getriebegehäuse und dem Sägeblatt eine weiteren Blende angelenkt ist, und/oder, wenn
* sämtliche Blenden innerhalb eines virtuellen Rechtecks oder Quadrats angeordnet sind, das in der Draufsicht auf das Sägeblatt die Außenwand des Schutzgehäuses umschreibt.

Ein Ausführungsbeispiel des Erfindungsgegenstandes wird nachfolgend anhand der Figuren 1 bis 6 näher erläutert.

Es zeigen:
- Figur 1: eine Seitenansicht einer Vertikal-Sägemaschine mit abgesenktem Schutzgehäuse mit Blick in Richtung der Pfeile I in Figur 2,
- Figur 2: eine Draufsicht auf den Gegenstand nach Figur 1,
- Figur 3: den Gegenstand nach Figur 1 mit maximal angehobenem Schutzgehäuse,
- Figur 4: Zusatzteile der Schutzvorrichtung nach den Figuren 1 bis 3 mit einer schwenkbaren Blende zur Abdeckung des Sägeblatts in angehobener Stellung des Schutzgehäuses in vergrößertem Maßstab und mit Blick in Richtung der Pfeile I in Figur 2,
- Figur 5: den Gegenstand nach Figur 4 in abgesenkter Stellung des Schutzgehäuses beim Sägen und
- Figur 6: in sehr schematischer Darstellung die räumliche Lage aller Teile der Schutzvorrichtung innerhalb des Schutzgehäuses in einer Stellung gemäß Figur 1 und mit Blick in Richtung der Pfeile I in Figur 2.

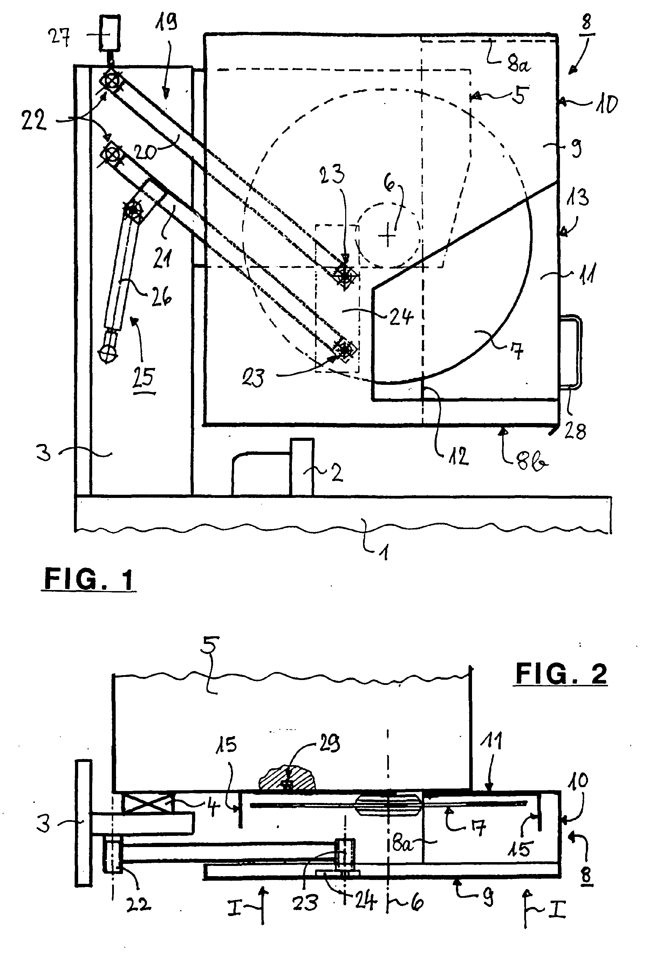

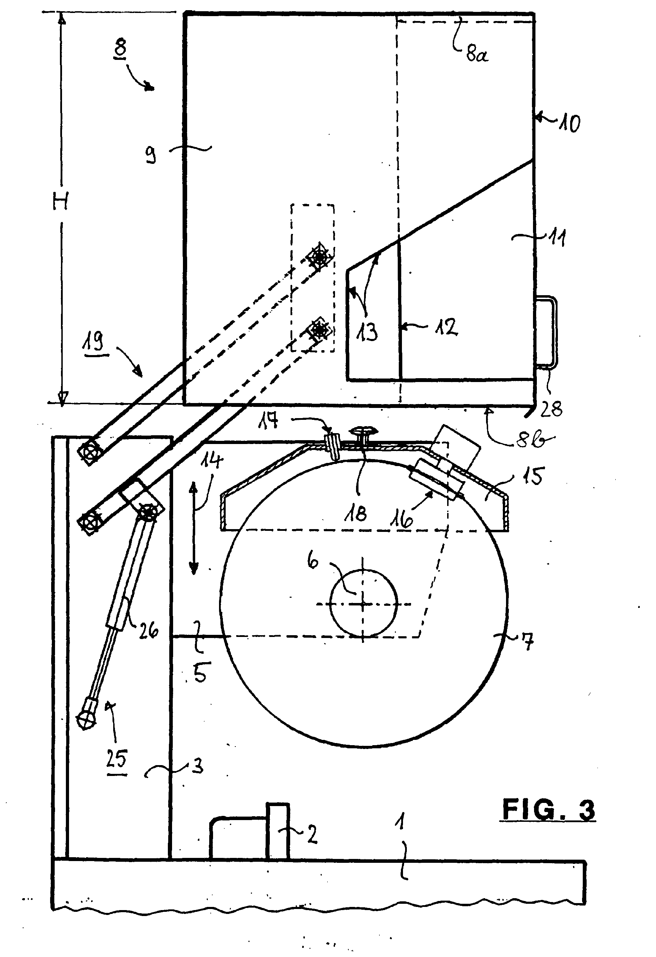

In den Figuren 1 und 2 ist ein Teil eines Sägemaschinentisches 1 mit einer Backe 2 einer Spannvorrichtung für Werkstücke dargestellt. Es kann sich dabei um eine feststehende Arbeitsplatte oder - bei Sägemaschinen für Gehrungsschnitte - um einen schwenkbaren Ausleger oder um eine drehbare Arbeitsplatte handeln. Vom Sägemaschinentisch 1 ragt eine senkrechte Führungssäule 3 auf, an der mittels einer vertikalen Parallelführung 4 ein Getriebegehäuse 5 geführt ist, das auf einer Sägewelle 6 ein Sägeblatt 7 trägt. Der mit dem Getriebegehäuse 5 verbundene Elektromotor ist der Einfachheit halber nicht dargestellt, desgleichen nicht die Vorrichtung (Rollenbahn) für die Zufuhr der Werkstücke (Vollmaterial und/oder Profile).

Das Sägeblatt 7 ist, wie speziell die axiale Ansicht in Figur 1 zeigt, in Ausschaltstellung mit seinem gesamten Umfang durch ein Schutzgehäuse 8 abgedeckt, das aus einer zur Sägeblattebene parallelen, rechteckigen oder quadratischen Außenwand 9, einer relativ dazu schmalen Frontwand 10 und einer Innenwand 11 besteht. Die Wände 9/10 und 10/11 stehen jeweils im rechten Winkel zueinander, wobei die Innenwand 11 sich nur bis zu einer vertikalen Kante 12 erstreckt, die unmittelbar vor der Sägewelle 6 bzw. vor den Befestigungsmitteln des Sägeblatts 7 endet. In der Außenwand 9 und teilweise auch in der Frontwand 10 ist ein etwa trapezförmiges Sichtfenster 13 angeordnet, das durch einen rechtwinkligen Formkörper aus durchsichtigem Material ausgefüllt ist. Der quaderförmige Raum zwischen der Außenwand 9 und der Innenwand 11 ist bis zur Kante 12 durch ein Deckenteil 8a nach oben hin abgeschlossen, und das Schutzgehäuse besitzt eine Unterkante 8b.

Dadurch wird ein teilweiser senkrechter Schacht mit der Höhe "H" (Figur 3) gebildet, in dem das Sägeblatt 7 in seiner gesamten Höhe bzw. mit seinem gesamten Durchmesser untergebracht werden kann, wie Figur 1 zeigt. Beim Sägen wird das Getriebegehäuse 5 mit dem Sägeblatt 7 aus der in Figur 1 gezeigten Stellung nach unten gefahren und danach wieder angehoben (Doppelpfeil 14 in Figur 3). Die Ausdrücke "Seitenansicht" und "Frontwand" beziehen sich auf die Blickrichtung einer Bedienungsperson, die vor der Sägemaschine steht, in den Figuren 1 bis 3 also rechts davon.

Gemäß den Figuren 2 und 3 ist an dem Getriebegehäuse 5 ein dachförmiges Innenteil 15 befestigt, das den Schacht im Spritzbereich des Sägeblatts 7 nach oben hin zumindest weitgehend abschließt und an dem ein Späneräumer 16, eine Sprüheinrichtung 17 und eine Kühlmitteldüse 18 angebracht sind. Auch diese Teile sind in der abgesenkten Stellung des Schutzgehäuses 8 nach Figur 1 in diesem innerhalb der Höhe "H" untergebracht und können durch Anheben des Schutzgehäuses 8 gleichfalls zugänglich gemacht werden.

Das Schutzgehäuse 8 ist an einer Parallelführung 19 befestigt, die aus zwei parallelen und gleich langen Lenkern 20 und 21 besteht, also eine Parallelogramm-Lenker-Anordnung darstellt. Zu diesem Zweck trägt die Führungssäule 3 zwei Gelenkzapfen 22 und das Schutzgehäuse 8 zwei weitere Gelenkzapfen 23, die an einer Versteifungsplatte 24 befestigt sind. Dadurch läßt sich das Schutzgehäuse 8 aus der in Figur 1 gezeigten Stellung in die in Figur 3 gezeigte Stellung hochschwenken. Dieses Hochschwenken und die Arretierung in der Höchststellung werden durch einen Gewichtsausgleich 25 in Form einer Gasfeder 26 unterstützt. Ein Endschalter 27 dient zur Blockierung des Antriebs bei freiliegendem Sägeblatt 7. Zur Bewegung des Schutzgehäuses 8 dient ein Handgriff 28.

Es ist Figur 3 deutlich zu entnehmen, daß zumindest der größte Teil des Sägeblatts 7 einem Ein- und Ausbau zugänglich ist, und daß ferner auch der Späneräumer 16, die Sprüheinrichtung 17 und die Kühlmitteldüse 18 zum Zwecke von Inspektionen, Wartungen und Einstellungen ohne Demontage von Teilen der Schutzvorrichtung zugänglich sind. Trotzdem gewährleistet die Schutzvorrichtung einen optimalen Schutz gegen Verletzungen der Bedienungsperson und gegen eine übermäßige Verunreinigung der Umgebung.

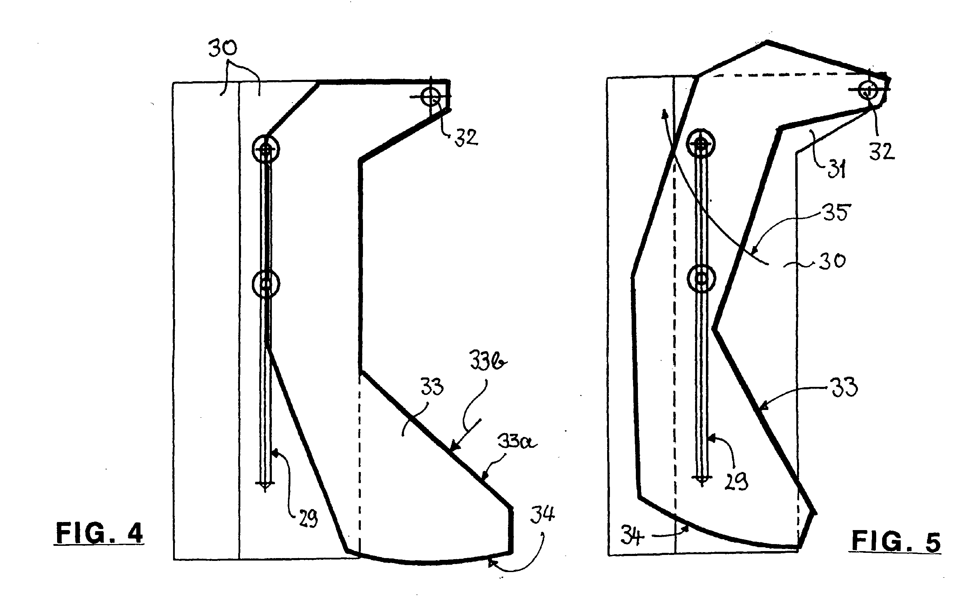

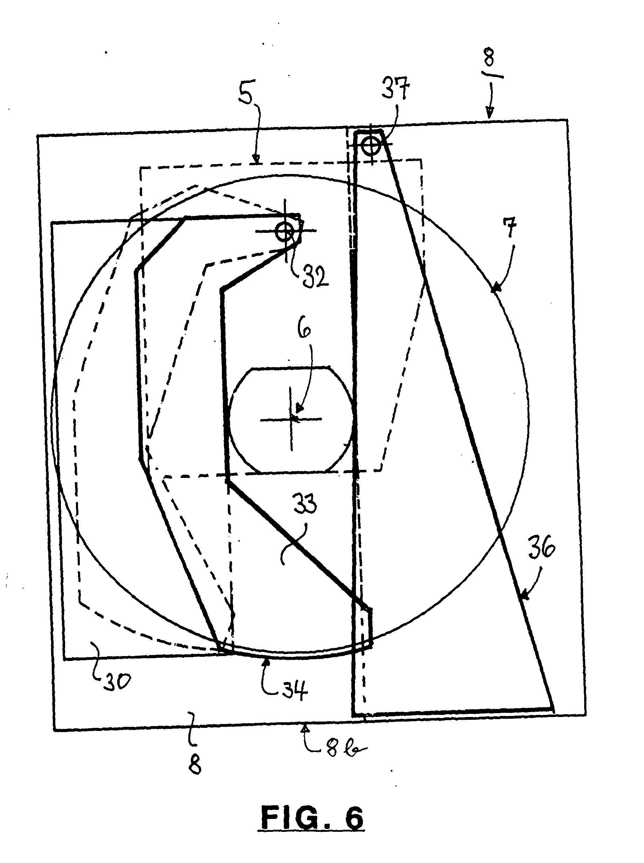

Die Figuren 4 und 5 zeigen noch Zusatzteile der Schutzvorrichtung in unterschiedlichen Stellungen. So ist an dem Getriebegehäuse 5 zwischen diesem und dem Sägeblatt 7 über eine vertikale Längsführung 29 (siehe auch Figur 2) ein Schubstück 30 geführt, das an seinem oberen Ende einen die Sägewelle 6 übergreifenden Ausleger 31 mit einem Gelenkzapfen 32 besitzt. An dem Gelenkzapfen 32 ist eine etwa C-förmige Blende 33 (mit starken Randlinien dargestellt) aufgehängt, die die Sägewelle 6 mit ausreichendem Vertikalspiel seitlich umgreift und deren kreisbogenförmige Unterkante 34 in der Stellung nach Figur 4 einen unteren Sektor des Sägeblatts 7 auf dessen Rückseite abdeckt.

Beim Sägevorgang selbst kann die Blende 33 in Richtung des Pfeils 35 in die Stellung nach Figur 5 geschwenkt werden. Dies geschieht wie folgt: Bei Beginn eines Sägevorgangs setzt die Unterkante 34 der Blende 33 zunächst auf dem Werkstück (oder der Spannvorrichtung mit der Backe 2) auf. Wird das Sägeblatt 7 jetzt weiter abwärts bewegt, so drückt entweder die Sägewelle 6 oder ein anderer, am Getriebegehäuse 5 angebrachtes Teil, z.B. ein Lagerdeckel, auf die schräge Kante 33a der Blende 33, also in Richtung des Pfeils 33b, wodurch die Blende 33 ohne überwindung großer Kräfte seitlich ausgeschwenkt wird. Das Schubstück 33 wandert hierbei relativ zum Getriebegehäuse mittels der Längsführung 29 nach oben.

Figur 6 zeigt noch einmal - stark schematisiert - das Zusammenwirken wesentlicher Teile aus den Figuren 1 bis 5 in einer Stellung des Schutzgehäuses 8 gemäß Figur 1: Gestrichelt dargestellt sind das Getriebegehäuse 5 und die Blende 33 in der ausgeschwenkten Stellung gemäß Figur 5. Zusätzlich gezeigt ist noch eine weitere Blende 36 (mit starken Randlinien dargestellt), die an einem Gelenkzapfen 37 aufgehängt ist, der an der Innenwand 11 des Schutzgehäuses 8 befestigt ist.

Der Ausdruck "Parallelführung" im Sinne der Erfindung schließt sowohl eine Linearführung mit ausreichendem Hub als auch die beschriebene Parallelogrammlenker-Anordnung ein, bei der die Schutzhaube 8 unter Beibehaltung der senkrechten Lage ihrer Achse eine Schwenkbewegung ausführt.

### Bezugszeichenliste:

- 1: Sägemaschinentisch
- 2: Backe
- 3: Führungssäule
- 4: Parallelführung
- 5: Getriebegehäuse
- 6: Sägewelle
- 7: Sägeblatt
- 8: Schutzgehäuse
- 8a: Deckenteil
- 8b: Unterkante
- 9: Außenwand
- 10: Frontwand
- 11: Innenwand
- 12: Kante
- 13: Sichtfenster
- 14: Doppelpfeil
- 15: Innenteil
- 16: Späneräumer
- 17: Sprüheinrichtung
- 18: Kühlmitteldüse
- 19: Parallelführung
- 20: Lenker
- 21: Lenker
- 22: Gelenkzapfen
- 23: Gelenkzapfen
- 24: Versteifungsplatte
- 25: Gewichtsausgleich
- 26: Gasfeder
- 27: Endschalter
- 28: Handgriff
- 29: Längsführung
- 30: Schubstück
- 31: Ausleger
- 32: Gelenkzapfen
- 33: Blende
- 33a: Kante
- 33b: Pfeil
- 34: Unterkante
- 35: Pfeil
- 36: Blende
- 37: Gelenkzapfen

## Patentansprüche

1. Vertikal-Sägemaschine mit einem Sägemaschinentisch (1), einem Getriebe mit einem Getriebegehäuse (5) und einer Sägewelle (6) mit kreisförmigem Sägeblatt (7), mit einer vertikalen Parallelführung (4) für das Verfahren von Getriebegehäuse (5) und und Sägeblatt (7) an einer vertikalen Führungssäule (3) sowie mit einer Schutzvorrichtung, die das Sägeblatt (7) zumindest auf einem Teil seines Umfangs mittels eines teilweise schachtförmigen Schutzgehäuses (8) umgreift, das eine Außenwand (9), eine Frontwand (10) und eine Innenwand (11) besitzt, wobei die Außenwand (9), die Frontwand (10) und die Innenwand (11) eine Höhe (H) aufweisen, die mindestens dem Durchmesser des Sägeblatts (7) entspricht, derart, daß das Sägeblatt (7) vollständig im Schutzgehäuse (8) unterbringbar ist, und wobei das Schutzgehäuse (8) zum Anheben an einer Parallelführung (19) angeordnet ist, **dadurch gekennzeichnet, daß** das Schutzgehäuse (8) so weit anhebbar ist, daß das Sägeblatt (7) unterhalb der Unterkante (8b) des Schutzgehäuses (8) von der Sägewelle (6) abnehmbar ist.

2. Vertikal-Sägemaschine nach Anspruch 1, **dadurch gekennzeichnet, daß** das Schutzgehäuse (8) so weit anhebbar ist, daß die Unterkante der Außenwand (9), in der Projektion auf die Sägeblattebene gesehen, oberhalb des höchsten Punktes des Sägeblatts (7) liegt.

3. Vertikal-Sägemaschine nach Anspruch 1, **dadurch gekennzeichnet, daß** oberhalb des Sägeblatts (8) in einem dachförmigen Innenteil (15) mindestens ein Einbauteil aus der Gruppe Späneräumer (16), Sprüheinrichtung (17) und Kühlmitteldüse (18) angeordnet ist und daß durch den Hub des Schutzgehäuses (8) auch das Innenteil (15) mit seinen Einbauteilen zugänglich ist.

4. Vertikal-Sägemaschine nach Anspruch 1, **dadurch gekennzeichnet, daß** die Parallelführung (19) aus parallelen Lenkern (20, 21) besteht deren eine Enden am Schutzgehäuse (8) und deren jeweils andere Enden an der Führungssäule (3) angelenkt sind.

5. Vertikal-Sägemaschine nach Anspruch 1, **dadurch gekennzeichnet, daß** die Parallelführung (19) des Schutzgehäuses (8) mit einer Einrichtung zum Gewichtsausgleich (25) zusammenwirkt.

6. Vertikal-Sägemaschine nach den Ansprüchen 4 und 5, **dadurch gekennzeichnet, daß** die Einrichtung zum Gewichtsausgleich (25) als Gasfeder (26) ausgebildet ist, die auf einen der Lenker (20, 21) einwirkt.

7. Vertikal-Sägemaschine nach Anspruch 1, **dadurch gekennzeichnet, daß** die Parallelführung (19) mit einem Endschalter (27) für die Erfassung der Stellung des Schutzgehäuses (8) zusammenwirkt.

8. Vertikal-Sägemaschine nach Anspruch 1, **dadurch gekennzeichnet, daß** das Schutzgehäuse (8) ein fest eingebautes Sichtfenster (13) aufweist.

9. Vertikal-Sägemaschine nach Anspruch 1, **dadurch gekennzeichnet, daß** an dem Getriebegehäuse (5) mittels einer vertikalen Längsführung (29) ein Schubstück (30) gelagert ist, an dem eine Blende (33) angelenkt ist, die sich zwischen dem Getriebegehäuse (5) und dem Sägeblatt (7) befindet, deren unterer Rand (34) in der Tiefststellung den untersten Kreisbogen des Sägeblatts (7) überdeckt und die beim Sägevorgang seitlich ausschwenkbar ist.

10. Vertikal-Sägemaschine nach Anspruch 9, **dadurch gekennzeichnet, daß** an dem Schubstück (30) ein Ausleger (31) mit einem Gelenkzapfen (32) angeordnet ist, der sich oberhalb der Sägewelle (6) befindet und die Blende (33) trägt.

11. Vertikal-Sägemaschine nach Anspruch 1, **dadurch gekennzeichnet, daß** an der Innenwand (11) des Schutzgehäuses (8) zwischen dem Getriebegehäuse (5) und dem Sägeblatt (7) eine weiteren Blende (36) angelenkt ist.

12. Vertikal-Sägemaschine nach den Ansprüchen 9 und 11, **dadurch gekennzeichnet, daß** sämtliche Blenden (33, 36) innerhalb eines virtuellen Rechtecks oder Quadrats angeordnet sind, das in der Draufsicht auf das Sägeblatt (7) die Außenwand (9) des Schutzgehäuses (8) umschreibt.
